# EUROPÄISCHE PATENTSCHRIFT

(11) **EP 0 650 684 B1**
(45) Veröffentlichungstag und Bekanntmachung des Hinweises auf die Patenterteilung: **15.01.1997**
(21) Anmeldenummer: 94110257.6
(22) Anmeldetag: 01.07.1994
(51) Int. Cl.: A47J 39/02, A47J 36/24

(54) **Vorrichtung zum Warmhalten und Erwärmen von Speisen**
Device for keeping hot and heating food
Dispositif par tenir au chaud et réchauffer des aliments

(30) Priorität: 04.07.1993 DE 4322152
(43) Veröffentlichungstag der Anmeldung: 03.05.1995
(73) Patentinhaber: Oppermann, Rolf, 64409 Messel (DE)
(72) Erfinder: Oppermann, Rolf, 64409 Messel (DE)
(74) Vertreter: Schäfer, René

(56) Entgegenhaltungen:
- WO-A-84/03029
- DE-A- 2 747 553
- DE-A- 3 345 859
- DE-A- 3 709 102
- DE-U- 9 014 240
- GB-A- 1 167 925
- US-A- 4 185 614

## Beschreibung

Die Erfindung betrifft eine Vorrichtung zum Warmhalten oder Erwärmen von Speisen und Getränken.

Warmhalteplatten oder Vorrichtungen zum Warmhalten von Serviergeschirr sind beispielsweise aus DE 37 09 102 A1, DE 33 45 859 A1 oder DE 78 25 036 U1 (Vgl. Oberbegriff des Anspruchs 1) bekannt.

In GB 1,167,925 ist eine Vorrichtung zum Warmhalten oder Erwärmen von Speisen beschrieben, welche mindestens ein Aufnahmeteil und ein Heizstab umfaßt. Die dort beschriebene Anordnung hat aber den Nachteil, daß Heizstab und Aufnahmeteil nicht fest miteinander verbunden sind, somit keine optimale Sicherheit bei der Benutzung gegeben ist, und der Heizstab nicht vor dem Eintritt von Flüssigkeiten und Speiseresten geschützt ist. Die Lebensdauer solcher Vorrichtungen ist daher sehr begrenzt.

Bei all diesen Heizeinrichtungen, die üblicherweise als Fondue-Rechands, Warmhalteplatten oder Tischkocher Verwendung finden, ist ein einteiliger Aufbau kennzeichnend, d. h. Heizteil und Standfläche bilden eine Einheit. Aufnahmeteile, die das warmzuhaltende Geschirr optimal umgeben und somit zufriedenstellend fixieren und isolieren sind nicht vorhanden oder aber untrennbar mit dem Heizteil verbunden. Dadurch ergibt sich ein gebrauchstechnisch nicht zufriedenstellender Aufbau, zumal keine effektive Ausnutzung der Heizleistung zum Erwärmen gewährleistet ist, die einteiligen Vorrichtungen nicht optimal gereinigt werden können, da die Heizteile bekanntlich vor Feuchtigkeit zu schützen sind, und eine ausreichende Standsicherheit für das aufzunehmende Geschirr nicht gewährleistet wird, somit eine sichere und einfache Bedienung, nicht möglich ist.

Da das Warmhalten von Geschirrteilen, Behältern und Speisen vor allem bei der Verpflegung in Altenheimen, bestimmten Bereichen von Krankenhäusern und bei der Ernährung von Kleinkindern und Behinderten wegen der langsamen Nahrungsaufnahme eine große Bedeutung erlangt hat, werden an eine Warmhaltevorrichtung, die auf dem Tisch beim Essen verwendet wird, neben der Warmhaltefunktion besondere Anforderungen gestellt.

Es muß beispielsweise für
- ein langes und gleichmäßiges Warmhalten der Speisen ohne Überhitzung
- eine hohe Standsicherheit der Einrichtung, inklusive dem warmzuhaltenden Geschirrteil
- eine einfache und sichere Bedienung ohne Verletzungsgefahr
- eine Gewährleistung besonderer hygienischer Anforderungen und eine einfache, aber gründliche Reinigung
- eine lange Lebensdauer
- einen geringen Stromverbrauch und
- eine hohe Mobilität

Sorge getragen werden, ohne daß die Effektivität der Vorrichtung darunter leidet.

Der vorliegenden Erfindung lag daher die Aufgabe zugrunde, eine im Aufbau einfache und für den technischen Einsatz zweckmäßige Vorrichtung zum Erwärmen oder Erhitzen von Speisen oder Getränken bereitzustellen, die insbesondere für die Verwendung in Altenheimen und Krankenhäusern geeignet ist oder bei der Ernährung von Kleinkindern oder Behinderten verwendet werden kann und die genannten Nachteile nicht besitzt sowie die aufgezeigten Anforderungen zufriedenstellend erfüllt.

Eine Vorrichtung, die diesen Anforderung gerecht wird, ist die mit dieser Erfindung (Vgl. Anspruch 1) beschriebene Einrichtung.

Gegenstand der Erfindung ist eine Vorrichtung zum gleichmäßigen Warmhalten oder Erwärmen von Speisen oder Getränken, dadurch gekennzeichnet, daß es sich um eine zwei- oder mehrteilige Vorrichtung handelt, die mindestens ein Aufnahmeteil und ein Heizteil umfaßt, die manuell, ohne Zuhilfenahme von Werkzeugen voneinander getrennt und gereinigt werden können.

Diese Vorrichtung zeichnet sich dadurch aus, daß das Heizelement, welches elektronisch geregelt ist, vom Aufnahmeteil auf einfache Weise per Hand getrennt werden kann. Hierdurch wird erreicht, daß ein Heizelement mit verschiedenen Aufnahmeteilen kombiniert werden kann, so daß für jede Gelegenheit das entsprechend geformte Aufnahmeteil zur optimalen Fixierung und Isolierung des jeweiligen Geschirrteils gewählt werden kann. Dies bedingt gleich-zeitig eine effektive Ausnutzung der entwickelten Wärme zur Erwärmung oder zum Warmhalten und reduziert den Stromverbrauch auf ein Minimum. Diese Tatsache wird zudem durch die elektronisch geregelte Heizquelle unterstützt, da die neuartige Heizung mit einer sehr geringen Leistung von weniger als 50 Watt auskommt.

Das Aufnahmeteil kann, wie bereits ausgeführt, mit einem Handgriff ohne zusätzliches Werkzeug von dem Heizteil gelöst werden. Die Stabilität und Standfestigkeit der Vorrichtung wird dabei in zusammengefügtem Zustand nicht beeinträchtigt. Der Vorteil der leichten Trennbarkeit von Heizquelle und Aufnahmeteil liegt dabei darin, daß das Aufnahmeteil, welches einer hohen Verschmutzung durch Speisereste ausgesetzt ist, einfach gereinigt werden kann.

Ein durch die Erfindung erreichter Vorteil besteht also insbesondere darin, daß zum Reinigen des Geräts das verschmutzte Teil problemlos vom Heizteil getrennt werden kann und mit Waschlauge, auch in leistungsstarken gewerblichen Spülmaschinen, gereinigt werden kann.

Hierdurch werden die hohen hygienischen Anforderungen bei einer Benutzung in Altenheimen, Krankenhäusern, Behindertenheimen oder anderen öffentlichen Einrichtungen in ausreichendem Maße erfüllt.

Bei der Vorrichtung ist neben einem einfachen Auswechseln des Aufnahmeteils für unterschiedliche Geschirrteile wie z. B. Teller, Eintopfschalen, Trinkflaschen, Kaffee-oder Teekannen, auch eine Kombination verschiedener Aufnahmeteile zur Fixierung größerer Speisenbehälter möglich, so daß die Einrichtung auch aus einem Heizelement und mehreren Aufnahmeteilen bestehen kann.

Die Aufnahmeteile sind aus lebensmittelechten Kunststoff gefertigt, welcher zudem spülmaschinenfest und hitzebeständig ist. Die Art des Materials ist hierbei nicht kritisch. Besonders vorteilhaft ist jedoch die Verwendung von lebensmittelechtem Kunststoff, welcher neben den genannten Kriterien zudem eine besonders hohe Bruchfestigkeit aufweist und daher eine hohe Lebensdauer besitzt.

Die Vorrichtungen besitzen an der Standfläche mehrere Aussparungen, die eine Kabeldurchführung an mehreren Stellen gewährleisten und gleichzeitig für eine gute Luftzirkulation während des Betriebes sorgen.

Gegenstand der Erfindung ist ferner eine Vorrichtung, die dadurch gekennzeichnet ist, daß die Abdeckplatte des Aufnahmeteils das Heizelement derart umgibt, daß das Gehäuseteil des Heizelementes vor dem Eintritt von Flüssigkeiten und Speiseresten vollkommen geschützt ist.

Durch diese Maßnahme wird eine lange Lebensdauer des Heizteile erreicht und gleichzeitig die Betriebssicherheit erheblich erhöht, da Kurzschlüsse durch Feuchtigkeitseintritt praktisch ausgeschlossen sind.

Das Heizelement weist ferner eine elektronische Temperaturregelung und einen Überhitzungsschutz auf. Die Warmhaltevorrichtung kann wahlweise durch Netzbetrieb (100 - 240 Volt) oder durch Akkus bzw. Batterien betrieben werden. Durch den Einsatz in einem solch großen Spannungsbereich kann die Einrichtung auch in Ländern mit dieser Spannungseinspeisung, z. B. in den U.S.A., betrieben werden und ist daher reisetauglich. Hierdurch, insbesondere durch Akku- oder Batteriebetrieb, wird ebenfalls eine hohe Mobilität erreicht.

Die Heizplatte ist antihaftbeschichtet, hat eine glatte Oberfläche und kann leicht gereinigt werden.

Die Vorrichtung garantiert eine einfache und sichere Benutzung. Bei der Konstruktion wurde darauf geachtet, daß Aufnahmeteil und Heizquelle nur in einer Weise zusammengefügt werden können, um auch hier alle Gefahrenmomente und Instabilitäten auszuschließen.

Die Vorrichtung erlaubt eine sichere Benutzung mit hohem Komfort und trägt allen eingangs angeführten Forderungen, auch unter Extrembedingungen, Rechnung.

Eine Ausführungsbeispiel als Tellerwarmhaltevorrichtung ist in der nachfolgenden Zeichnung dargestellt. Es zeigen:
1. Aufnahmeteil
2. Elektrozuleitung
3. Kabeleinführung mit Zugentlastung
4. unteres Gehäuseteil des Heizelements
5. Heizelement mit elektronischer Regelung

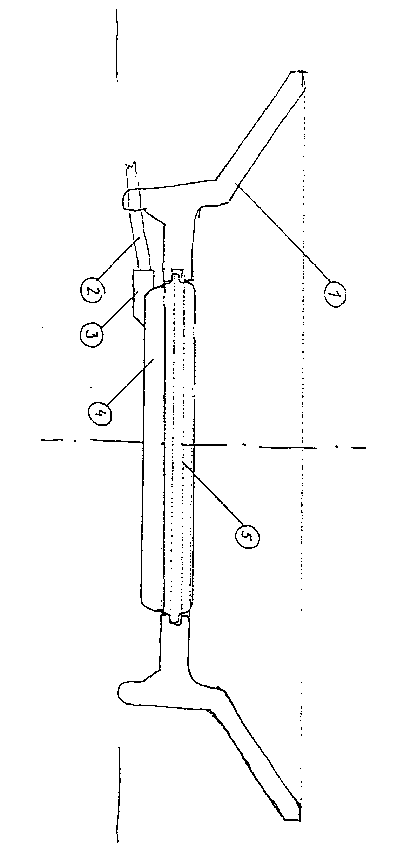

## Patentansprüche

1. Zwei- oder mehrteilige Vorrichtung zum gleichmäßigen Warmhalten oder Erwärmen von Speisen oder Getränken, welche mindestens ein Aufnahmeteil (1) und ein Heizteil (5) umfaßt, dadurch gekennzeichnet, daß des Aufnahmeteil (1) und das Heizteil (5) manuell, ohne Zuhilfenahme von Werkzeugen voneinander getrennt und gereinigt werden können, und daß das Aufnahmeteil (1) das Heizteil (5) derart umgibt, daß das Gehäuseteil des Heizteiles (5) vor dem Eintritt von Flüssigkeiten und Speiseresten vollkommen geschützt ist.

2. Vorrichtung gemäß Anspruch 1, dadurch gekennzeichnet, daß das Heizteil (5) eine elektronische Temperaturregelung mit Überhitzungsschutz enthält.

3. Vorrichtung gemäß einem oder beiden der vorhergehenden Ansprüche, dadurch gekennzeichnet, daß die Heizung (5) wahlweise durch Netzstrom, als auch durch Akkus oder Batterien betrieben werden kann.

4. Vorrichtung gemäß einem oder mehreren der vorhergehenden Ansprüche, dadurch gekennzeichnet, daß Heiz- (5) und Aufnahmeteil (1) zur sicheren Benutzung durch Einhandbedienung nur in der korrekten Anordnung kombiniert werden können.

## Claims

1. An appliance comprising two or more parts for evenly warming or heating food or beverages which has at least one container (1) and at least one heating element (5), characterised in that the container (1) and the heating element (5) can be separated from one another manually and cleaned without the use of any tools and that the container (1) surrounds the heating element (5) in such a way that it is protected completely from being touched by liquids and left-overs.

2. An appliance according to claim 1, characterised in that the heating element (5) contains an electronical temperature control with overheating protection.

3. An appliance according to one or both of the preceding claims, characterised in that the heating element (5) is operating alternatively with line current, alternating current control units or batteries.

4. Appliances according to one or more of the preceding claims, characterised in that the heating element (5) and the container (1) for a save use by one hand operation fit together in only one way.

## Revendications

1. Appareil constitué par deux ou plusieurs éléments pour tenir chaud à température constante ou pour faire chauffer des aliments ou boissons, comprenant au moins un récipient (1) et un élément de chauffage (5) ayant pour caractéristique que le récipient (1) et l' élément de chauffage (5) puissent manuellement être séparés l'un de l'autre et être nettoyés sans avoir recours à l'emploi d'outils et que le récipient (1) entoure l'élément de chauffage (5) de telle manière que le boîtier de l'élément de chauffage (5) soit absolument étanche aux liquides et restes d'aliments.

2. Appareil satisfaisant à la 1 ère revendication ayant pour caractéristique que l'élément de chauffage (5) comprenne un dispositif électronique de réglement de la température avec protection contre la surchauffe.

3. Appareil satisfaisant à l'une ou aux deux revendications précédentes ayant pour caractéristique que le chauffage (5) puisse fonctionner au choix à l'électricité mais aussi au moyen d'accus ou de piles.

4. Appareils satisfaisant à l'une ou à plusieurs des revendications précédentes, ayant pour caractéristique que l'élément de chauffage (5) et le récipient (1) ne puissent être combinés que dans l'ordre correct pour une utilisation sûre nécessitant seulement l'emploi d'une main.
